# EUROPEAN PATENT SPECIFICATION

(11) **EP 1 554 200 B1**
(45) Date of publication and mention of the grant of the patent: **20.12.2006**
(21) Application number: 03809170.8
(22) Date of filing: 16.10.2003
(51) Int. Cl.: B65G 45/22

(54) **AUTOMATED CONVEYOR BELT TREATMENT SYSTEM**
AUTOMATISIERTES FÖRDERBANDBEHANDLUNGSSYSTEM
SYSTEME DE TRAITEMENT AUTOMATIQUE DE BANDE TRANSPORTEUSE

(30) Priority: 16.10.2002 US 418960 P
(43) Date of publication of application: 20.07.2005
(73) Proprietor: JohnsonDiversey, Inc., Sturtevant, WI 53177-0902 (US)
(72) Inventor: BRINK, Christopher, Hamilton, OH 45011-1251 (US)
(74) Representative: Ruschke, Hans Edvard
(86) International application number: PCT/US2003/033159
(87) International publication number: WO 2004/035433

(56) References cited:
- WO-A-01/11993
- DE-U- 9 316 931
- US-A- 5 368 650
- PATENT ABSTRACTS OF JAPAN vol. 007, no. 217 (M-245), 27 September 1983 (1983-09-27) & JP 58 113023 A (ISHIKAWAJIMA HARIMA JUKOGYO KK;OTHERS: 01), 5 July 1983 (1983-07-05)

## Description

### BACKGROUND OF THE INVENTION

### Field of the Invention.

The field of the invention is a treatment system for a conveyor apparatus used in manufacturing environments and the method of applying a solution to a rotating conveyor belt. The invention discloses an apparatus which simultaneously treats the conveyor belt while processing products (e.g. see document US-A-5308650).

### Background.

The protection of products from contamination during use of conveyor apparatus have plagued the manufacturing industry. The current invention solves the dilemma of having to shut the system down to treat the system with a sanitizer, a washing solution or a lubricant between product runs. The present invention treats the conveyor belt during the part of the system when the conveyor belt contains no products and is returning to the beginning of the production line to pick up the next batch of products. The invention allows for the continuous running of the conveyor belt while still providing proper conditions.

The issue of sanitized production conditions is most prevalent in the food manufacturing industry in which any contamination of the product can harm the health of the end user of the product. The current system would safeguard the food manufacturing industry from any contamination of product or cross-contamination of separate products run on a single conveyor belt. The invention further includes a method in which a sanitizer is constantly diluted, dispensed, and applied to a conveyor belt sanitizing the conveyor belt surface for contact with product which allows for constant production runs which eliminate costly shut-downs for sanitizing purposes.

The invention further allows for the use of a cleaning solution, a sanitizer and/or application of a lubricant alone or in any combination in the various steps of the treatment process. The invention solves the two main problems of the existing technology in which there is the use of brushes that can slow a line or stop a line and can damage the conveyor belt itself or require the shutting down of the line in order to treat the conveyor belt. The current invention uses a wash spray bar to effectively clean the conveyor belt as it is passed through the solution of the sump basin that allows for the effective cleaning or sanitizing of the conveyor belt while not interrupting the line.

US Patent 5,649.616 discloses a conveyor belt washing system in which the conveyor belt is continuously cleaned during use. The aforementioned patent diverts the conveyor belt through a series of brushes to clean the conveyor belt during processing in order to properly clean the conveyor belt.

US Patent 3,998,321 discloses a conveyor belt system that uses wash rollers and a fluid wash basin to clean the conveyor belt. The '321 patent uses wash rollers in contact with the top surface of the conveyor belt prior and after the conveyor belt is passed through the wash basin to clean the conveyor belt effectively.

### SUMMARY OF THE INVENTION

The treatment system utilizes the continuous rotation of the conveyor belt to apply a lubricating, cleaning and/or sanitizing process.

As the conveyor belt travels to the end of the frame, it travels under the conveyor apparatus frame and into the treatment system.

As the conveyor belt enters the system, the product contact surface is positioned face down. Inside the system is a cascading sump basin of residual solution, here the conveyor belt is submerged for an initial rinse. As the conveyor belt moves through the sump it travels between at least one recirculating wash spray bars. The preferred embodiment has two wash spray bars a top bar floods the underside of the conveyor belt; the bottom bar rinses the topside surface of the conveyor belt. Once the conveyor belt leaves the recirculating spray bars it is moved to a vertical position and passed in front of a rinse spray bar. This spray bar is not only used to spray the sanitizer on the topside of the conveyor belt which is the product contact area, but also may be used for application of a lubricant or other treatment product. As the conveyor belt leaves the treatment system, it allows the sanitizer or lubricant the proper drying and contact time to achieve its purpose. This extended time not only allows the chemistry to work longer, it also allows the process to use a lower concentration of product such as the sanitizer. The system also incorporates a system check function which allows the monitoring and recording of treatment use and function. The check system further allows for the automatic stopping and starting of the treatment system directly relating to the conveyor belts operation.

The ultimate goal of the sanitation process disclosed in this invention is to combine the product manufacturing process with the treatment process providing for an efficient, safe, and sanitary production process and final product.

### BRIEF DESCRIPTION OF THE DRAWINGS

Figure 1 a side view showing the components of the treatment system in conjunction with the conveyor apparatus.
Figure 2 a side view of the treatment system integrating with the conveyor belt.
Figure 3 a side view of the treatment system integrating with the conveyor belt with multiple rinse spray bars.
Figure 4 a top view of the treatment system with the conveyor belt engaged and the sump basin shown in phantom.
Figure 5 a top view of the conveyor belt system with the treatment system show in a cut away.

### DESCRIPTION OF THE PREFERRED EMBODIMENT

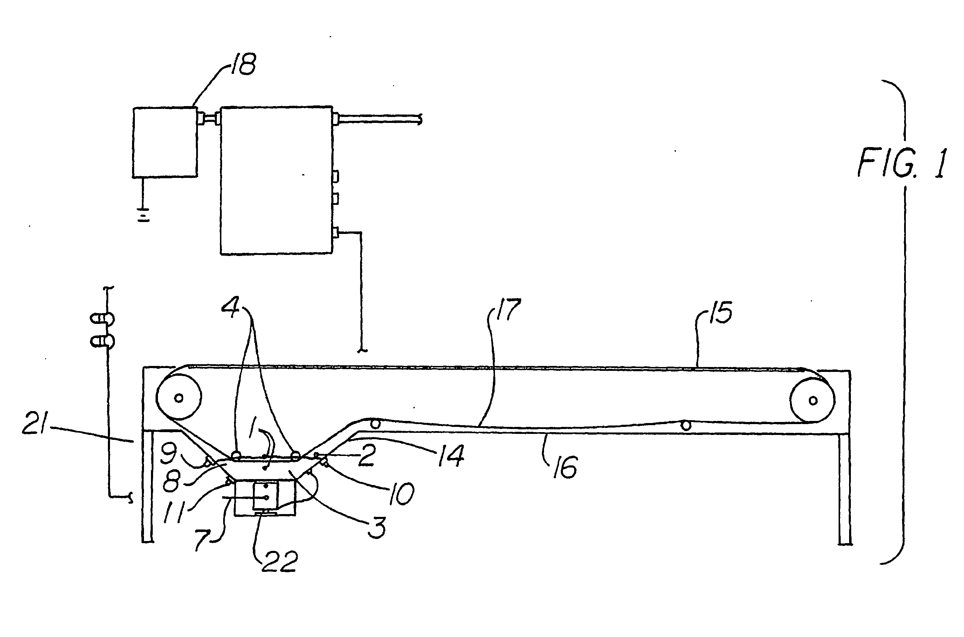

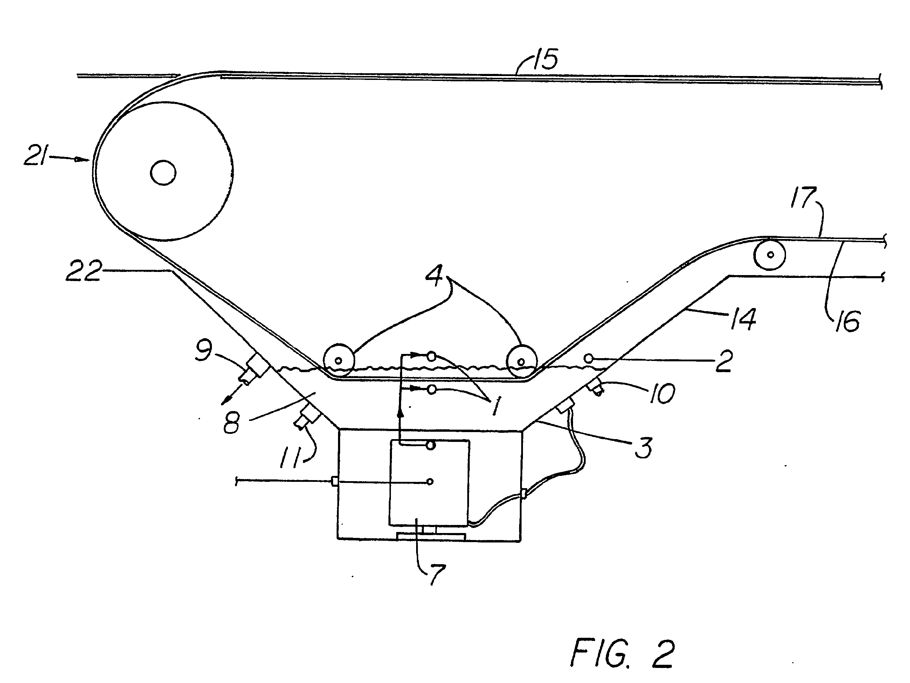

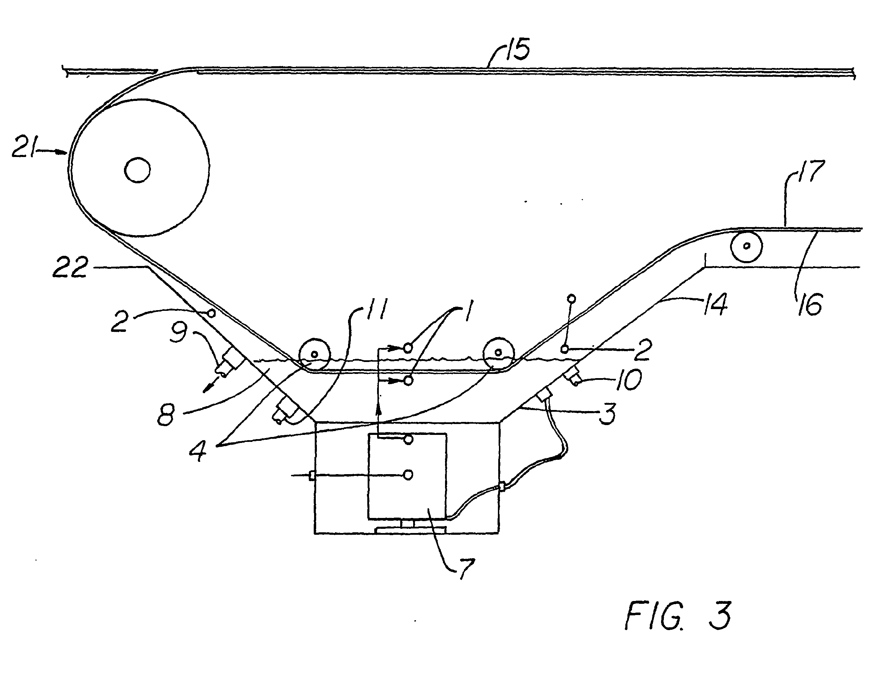

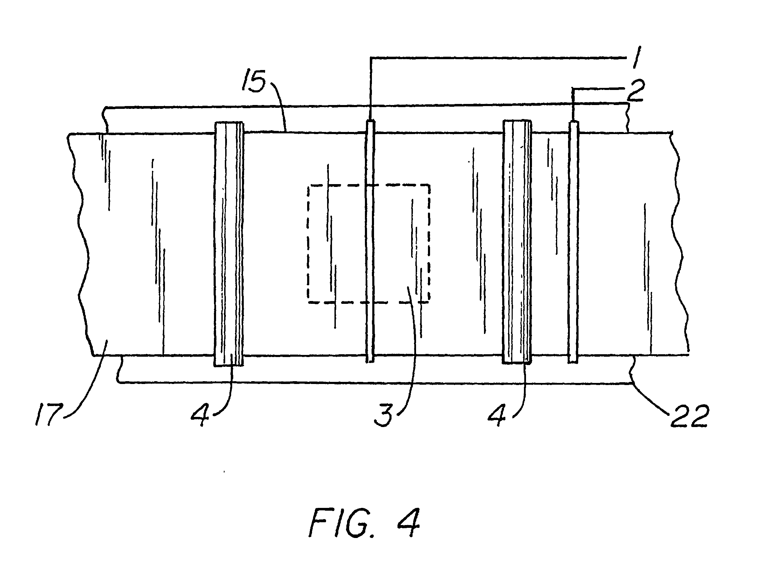

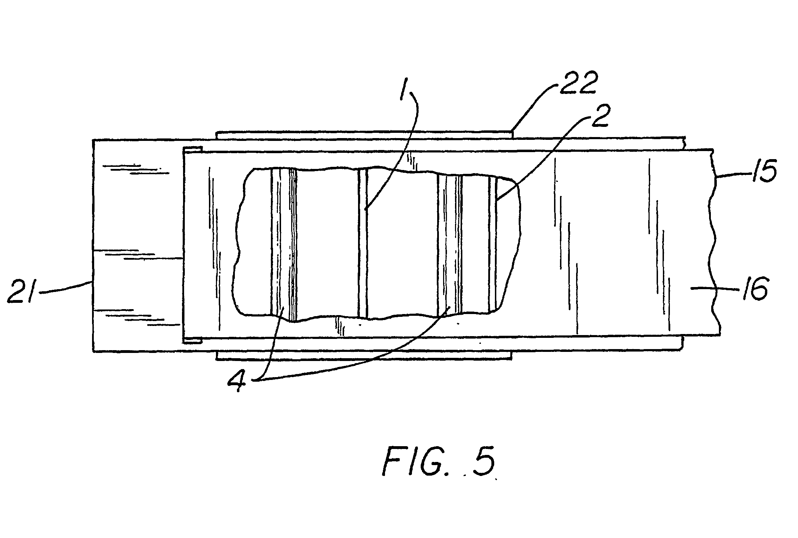

Referring to Figures 1-5, one embodiment of the treatment system generally 22 is system for treatment of a conveyor apparatus generally 21 comprised of a sump basin 3 containing a solution 8. The solution 8 is in the sump basin 3 at a level to submerse a portion of a conveyor belt 15. The conveyor apparatus 21 has the treatment system 22 attached to it and the conveyor belt 15 is guided by at least one conveyor belt guide 4 into the treatment system 22. Once the conveyor belt 15 is engaged with the treatment system 22 the conveyor belt 15 enters the sump basin 3 containing a solution 8 there is at least one wash spray bar 1 submersed below the solution 8.

Additional embodiments may further include one or more of the following items. The invention may include a circulation pump 7 that is located below the sump basin 3 and regulates the amount and flow of the solution in the sump basin 3. The invention may include one or more rinse spray bars 2 which can be located prior to the wash rinse bars 1 or after the wash rinse bars 1. The invention also may include a cascade drain keeps the solution 8 level consistent in the sump basin and/or a skimmer drain 10 which allows for debris from the conveyor belt 15 which is floating to be removed with out having to empty the entire sump basin 3 and/or a drain 11 which is located in the lower section of the sump basin 3 allowing for the complete draining of the solution 8 from the sump basin 3. The invention may further include a shedding pan 14 which is connected to the sump basin, collects, and returns any excess solution 8 on the conveyor belt 15 to be returned to the sump basin 3.

The invention allows for the use of various solutions with the treatment system including, but not limited to, sanitizers, washing compositions and lubricants. The solution 8 in the sump basin and the solutions from the rinse bars may be the same solution or may be different solutions for various applications and purposes including the application of lubricants. In addition, the solution that is emitted from the wash spray bar 1 may be drawn from the solution 8 in the sump basin.

The invention in addition to all the other features includes two or more wash spray bars 1 at least one submersed below the solution which sprays the topside 16 of the conveyor belt 15 and at least one wash spray bar 1 above the solution which sprays the underside 17 of the conveyer as it passes through the solution 8. The invention may also have multiple rinse spray bars 2 that can be located below the conveyor belt 15 to spray the topside 16 of the conveyor belt 15 and/or located above the conveyor belt 15 to spray the underside 17 of the conveyer 15. The rinse spray bars 2 and the wash spray bars 1 can be in of varying length and size but must emit enough of whatever solution and cover enough surface area to reach all of the surface area of the conveyor belt 15.

As seen in Fig. 1, the invention may further include a standard monitoring system 18 wherein the monitoring system 18 starts and stops the treatment system 22 at required intervals to limit unnecessary excess treatment. The monitoring system 22 can also track and control solution 8 levels in the sump basin 3 and amount of solutions to be emitted from the wash 1 and rinse spray bars 2.

The invention includes a method of cleaning a conveyor belt 15 wherein once the conveyor belt 15 is free of any product it is diverted into a treatment system 22 comprised of a sump basin 3 containing a solution 8 and at least one wash spray bar 1 which is submersed in the solution 8 and sprays the conveyor belt 15 as it passes through the sump basin 3.

The method also includes placing at least one wash spray bar submersed in the solution and spraying the topside of the conveyor belt as it passes through the sump basin solution and at least one wash spray bar above the solution and spraying the underside of the conveyor belt 15 as it passes through the sump basin solution. The method further including a rinse spray bar 2 wherein after the conveyor belt 15 leaves the sump basin 3 solution 8 there is at least one rinse spray bar 2 that emits a solution to the conveyor belt 15. The method where there is at least one rinse spray bar 2 positioned to emit a solution to the top side 16 of the conveyor belt 15 and at least one rinse spray bar 2 positioned to emit a solution on the underside 17 of the conveyor belt 15 as the conveyor belt 15 exits the sump basin 3 solution 8. The method further including at least one rinse spray bar 2 prior to the sump basin 3 to rinse the conveyor belt 15.

## Claims

1. A system (22) for treatment of a conveyor belt (15) comprising:
a sump basin (3) containing a solution (8) at a level to submerse a portion of a conveyor belt (15);
at least one conveyor belt guide (4); and
at least one wash spray bar (1) submersed below the solution (8);
**characterized in that**
at least one rinse spray bar (2) is not submersed below the solution (8).

2. The system of claim 1 further including a circulation pump (7).

3. The system of claim 2 wherein the sump basin (3) includes a cascade drain (4).

4. The system of claim 2 wherein the sump basin (3) includes a skimmer drain (10) at the solution level to allow the purging of any floating debris.

5. The system of claim 2 wherein the sump basin (3) includes a drain (10) in proximity to the bottom of the sump basin (3).

6. The system of claim 2 wherein a shedding pan (14) is connected to the sump basin (3).

7. The system of claim 6 wherein the shedding pan (14) collects and returns all excess solution (8) from the conveyor belt (15) into the sump basin (3).

8. The system of claim 1 wherein the solution (8) is a lubricant, a washing solution or a sanitizing solution.

9. The system of claim 1 wherein there are at least two wash spray bars (1), one submersed below the solution (8) which sprays the topside of the conveyor belt (15) and a wash spray bar (1) above the solution which sprays the underside of the conveyor (15) as it passes through the solution.

10. The system of claim 2 wherein at least one rinse spray bar (2) is rinsing the conveyor belt (15) after it leaves the solution (8).

11. The system of claim 2 wherein there are two rinse spray bars (2), one spray bar (2) rinsing the topside (16) of the conveyor belt (15) prior to it entering the solution (8) and one spray bar (2) rinsing the topside (16) of the conveyor belt (15), after it leaves the solution (8).

12. The system of claim 1 wherein there are two rinse spray bars (2), one rinsing the topside of the conveyor belt (15) and the other (2) rinsing the underside (17) of the conveyor belt (15) prior to the conveyor belt (15) entering the solution (8) and two rinse spray bars (2) one rinsing the topside (16) of the conveyor belt (15) and the other (2) rinsing the underside (17) of the conveyor belt (15) after the conveyor belt (15) leaves the solution (8).

13. The system of claim 1 wherein the solution (8) in the sump basin (3) and the solution (8) emitted from the rinse (2) and wash (1) spray bars is a sanitizing solution.

14. The system of claim 1 wherein the solution (8) in the sump basin (3) and the solution (8) emitted from the wash spray bar (1) is the same solution.

15. The system of claim 14 wherein the solution emitted from the rinse spray bar (2) is not the same as the solution (8) in the sump basin (3).

16. The system of claim 15 wherein the solution emitted from the wash bar (1) draws the solution (8) from the sump basin (3).

17. The system of claim 1 wherein the wash (1) and rinse (2) spray bars are of a size so that enough solution (8) is emitted to saturate the width of the conveyor (15).

18. The system of claim 10 wherein the rinse spray bar (2) is emitting a lubricant onto the conveyor belt (15).

19. The system of claim 16 wherein the solution (8) in the sump basin (3) and emitted from the wash spray bars (1) is a washing solution and the solution emitted from the rinse spray bars (2) is a sanitizing solution.

20. The system of claim 1 comprising a monitoring system (18) to track the systems use.

21. The system of claim 20 wherein the monitoring system (18) starts and stops the system (22) at required intervals allowing for the use only when needed.

22. The system of claim 20 wherein the monitoring system (18) controls the solution levels in the sump basin (3) and the spray amount from the wash (1) and rinse (2) spray bars.

23. A method of cleaning a conveyor belt (15) wherein once the conveyor belt (15) is free of any product it is diverted into a treatment system (22) comprised of:
a sump basin (3) containing a solution (8); and
at least one wash spray bar (1) which is submersed in the solution and sprays the conveyor belt (15) as it passes through the sump basin (3);
**characterized in that** the treatment system (22) further comprises
at least one rinse spray bar (2) that is not submersed below the solution (8), and rinses the conveyor belt (15) when it is not submersed in the solution (8).

24. The method of claim 23 wherein there is at least one wash spray bar (1) submersed in the solution (8) and sprays the topside (16) of the conveyor belt (15) as it passes through the sump basin solution (8) and at least one wash spray bar (1) above the solution (8) and sprays the underside (17) of the conveyor belt (15) as it passes through the sump basin solution (8).

25. The method of claim 23 wherein after the conveyor belt (15) leaves the sump basin solution (8) there is at least one rinse spray bar (2) that emits a solution (8) to the conveyor belt (15).

26. The method of claim 25 wherein there is at least one rinse spray bar (2) positioned to emit a solution (8) to the topside (16) of the conveyor belt (15) and at least one rinse spray bar (2) positioned to emit a solution (8) on the underside (17) of the conveyor belt (15) as the conveyor belt (15) exits the sump basin solution (8).

27. The method of claim 23 wherein before the conveyor belt (15) enters the sump basin solution (8) there is at least one rinse spray bar (2) that emits a solution (8) to the conveyor belt (15).

28. The method of claim 25 wherein there is at least one rinse spray bar (2) positioned to emit a solution (8) to the topside (16) of the conveyor belt (15) and at least one rinse spray bar (2) positioned to emit a solution (8) on the underside (17) of the conveyor belt (15) as the conveyor belt (15) enters the sump basin solution (8).

## Patentansprüche

1. System (22) zur Behandlung eines Förderbandes (15) mit:
einem Sumpfbecken (3), das eine Lösung (8) mit einem solchen Füllstand enthält, dass ein Teil eines Förderbandes (15) in ihr untertauchen kann;
mindestens einer Förderbandführung (4); und
mindestens einer Waschspritzstange (1), die in die Lösung (8) untergetaucht ist;
**dadurch gekennzeichnet, dass**
mindestens eine Spülspritzstange (2) nicht in die Lösung (8) untergetaucht ist.

2. System nach Anspruch 1 weiterhin mit einer Umwälzpumpe (7).

3. System nach Anspruch 2, dessen Sumpfbecken (3) einen Stufenablass aufweist.

4. System nach Anspruch 2, dessen Sumpfbecken (3) einen Abstreifablauf (10) auf der Standhöhe der Lösung hat, um auf ihr treibende Verunreinigungen zu entfernen.

5. System nach Anspruch 2, dessen Sumpfbecken (3) nahe seiner untersten Stelle einen Ablauf (10) enthält.

6. System nach Anspruch 2, bei dem mit dem Sumpfbecken (3) eine Abweiswanne (14) verbunden ist.

7. System nach Anspruch 6, dessen Abwurfwanne (14) überschüssige Lösung (8) aus dem Förderband (15) sammelt und in das Sumpfbecken (3) zurückführt.

8. System nach Anspruch 1, bei dem die Lösung (8) ein Schmiermittel, eine Wasch- oder eine Hygienisierungslösung ist.

9. System nach Anspruch 1 mit mindestens zwei Waschspritzstangen (1), von denen eine unter die Standhöhe der Lösung (8) untergetaucht ist und die Oberseite des Förderbands (15) abspritzt, während eine Waschspritzstange (1) über der Lösung die Unterseite des Förderers (15) abspritzt, während er die Lösung durchläuft.

10. System nach Anspruch 2, bei dem mindestens eine Spülspritzstange (2) das Förderband (15) abspült, nachdem es die Lösung (8) verlässt.

11. System nach Anspruch 2 mit zwei Spülspritzstangen (2), von denen eine Spritzstange (2) die Oberseite (16) des Förderbandes (15) vor dem Einlauf in die Lösung und eine Spülspritzstange (2) die Oberseite (16) des Förderbandes (15) nach dem Verlassen der Lösung abspritzt.

12. System, nach Anspruch 1 mit zwei Spülspritzstangen (2), von denen eine die Oberseite und die andere die Unterseite (17) des Förderbandes (15) vor dem Einlauf des Förderbandes (15) in die Lösung (8) abspritzt, und mit zwei Spülspritzstangen (2), von denen eine die Oberseite und die andere die Unterseite des Förderbandes (15) abspritzt, nachdem das Förderband (15) die Lösung verlässt.

13. System nach Anspruch 1, bei dem es sich bei der Lösung (8) im Sumpfbecken (3) und der von den Spül- und Waschspritzstangen (2, 1) verspritzten Lösung (8) um eine Hygienisierungslösung handelt.

14. System nach Anspruch 1, bei dem es sich bei der Lösung (8) im Sumpfbecken (3) und der aus der Waschspritzstange (1) verspritzten Lösung (8) um die gleiche Lösung handelt.

15. System nach Anspruch 14, bei dem die aus der Spülspritzstange (2) verspritzte Lösung nicht die gleiche ist wie die Lösung (8) im Sumpfbecken (3).

16. System nach Anspruch 15, bei dem die aus der Waschspritzstange (1) verspritzte Lösung die Lösung (8) aus dem Sumpfbecken (3) zieht.

17. System nach Ansruch 1, deren Wasch- und Spülspritzstangen (1, 2) so groß sind, dass sie genug Lösung (8) verspritzen, um die gesamte Breite des Förderbandes (15) zu durchtränken.

18. System nach Anspruch 10, bei dem die Spülspritzstange (2) ein Schmiermittel auf das Föderband (15) spritzt.

19. System nach Anspruch 16, bei dem die Lösung (8) im Sumpfbecken (3), die von den Waschspritzstangen (1) verspritzt wird, eine Waschlösung und die aus den Spülspritzstangen (2) verspritzte Lösung eine Hygienisierungslösung ist.

20. System nach Anspruch 1 mit einem Überwachungssystem (18) zur Verfolgung des Systembetriebs.

21. System nach Anspruch 20, bei dem das Überwachungssystem (18) das System intervallweise und nur bei Bedarf anfährt und stillsetzt.

22. System nach Anspruch 20, bei dem das Überwachungssystem (18) die Standhöhe der Lösung im Sumpfbecken (3) und die von den Wasch- und Spülspritzstangen (1, 2) ausgespritzten Lösungsmengen steuert.

23. Verfahren zum Reinigen eines Förderbandes (15), bei dem das Förderband (15), sobald es frei von Fördergut ist, in ein Behandlungssystem (22) umgelenkt wird, das aufweist:
ein Sumpfbecken (3), das eine Lösung (8) enthält; und
mindestens eine Waschspritzstange (1), die in der Lösung untergetaucht ist und das Förderband (15) beim Durchlaufen des Sumpfbeckens (3) abspritzt;
**dadurch gekennzeichnet, dass** das Behandlungssystem (22) weiterhin
mindestens eine Spülspritzstange (2) aufweist, die nicht in die Lösung (8) untergetaucht ist und das Förderband (15) abspült, wenn es nicht in die Lösung (8) eintaucht.

24. Verfahren nach Anspruch 23, bei dem mindestens eine Waschspritzstange (1) in die Lösung (8) untergetaucht ist und die Oberseite (16) des Förderbands (15) abspritzt, während dieses durch die Lösung (8) im Sumpfbecken läuft, und mindestens eine Waschspritzstange (1) über der Lösung (8) liegt und die Unterseite des Förderbandes (15) abspritzt, während es durch die Lösung (8) im Sumpfbecken läuft.

25. Verfahren nach Anspruch 23, bei dem, nachdem das Förderband (15) die Lösung (8) im Sumpfbecken verlässt, es von mindestens einer Spülspritzstange (2) mit einer Lösung (8) bespritzt wird.

26. Verfahren nach Anspruch 25, bei dem mindestens eine Spülspritzstange (2) zum Aufspritzen einer Lösung (8) auf die Oberseite (16) und mindestens eine Spülspritzstange (2) zum Aufspritzen einer Lösung (8) auf die Unterseite (17) des Förderbands (15) vorliegen, während dieses die Lösung (8) im Sumpfbecken verlässt.

27. Verfahren nach Anspruch 23, bei dem mindestens eine Spülspritzstange (2) vorliegt, die das Förderband (15) mit einer Lösung (8) abspritzt, bevor es in die Lösung (8) im Sumpfbecken einläuft.

28. Verfahren nach Anspruch 25, bei dem mindestens eine Spülspritzstange (2) zum Aufspritzen einer Lösung (8) auf die Oberseite (16) und mindestens eine Spülspritzstange (2) zum Aufspritzen einer Lösung (8) auf die Unterseite (17) des Förderbandes (15) vorliegen, während dieses in die Lösung (8) im Sumpfbecken einläuft.

## Revendications

1. Système (22) de traitement d'une courroie transporteuse (15) comprenant :
un bassin (3) contenant une solution (8) à un niveau permettant d'immerger une partie d'une courroie transporteuse (15) ;
au moins un guide de courroie transporteuse (4) ; et
au moins une barre de pulvérisation de nettoyage (1) immergée sous la solution (8) ;
**caractérisé en ce qu'**
au moins une barre de pulvérisation de rinçage (2) n'est pas immergée sous la solution (8).

2. Système selon la revendication 1, comprenant en outre une pompe de circulation (7).

3. Système selon la revendication 2, dans lequel le bassin (3) comprend un dispositif de vidange en cascade (4).

4. Système selon la revendication 2, dans lequel le bassin (3) comprend un dispositif de drainage à écumoire (10) au niveau de la solution, permettant de purger les éventuels débris flottants.

5. Système selon la revendication 2, dans lequel le bassin (3) comprend un système de drainage (10) à proximité du fond du bassin (3).

6. Système selon la revendication 2, dans lequel un bac de déversement (14) est relié au bassin (3).

7. Système selon la revendication 6, dans lequel le bac de déversement (14) collecte et renvoie tout le surplus de solution (8) provenant de la courroie transporteuse (15) dans le bassin (3).

8. Système selon la revendication 1, dans lequel la solution (8) est un lubrifiant, une solution de nettoyage ou une solution désinfectante.

9. Système selon la revendication 1, dans lequel il y a au moins deux barres de pulvérisation de nettoyage (1), une immergée sous la solution (8) qui pulvérise le côté supérieur de la courroie transporteuse (15) et une barre de pulvérisation de nettoyage (1) au-dessus de la solution, qui pulvérise le côté inférieur de la courroie (15) lorsqu'elle passe à travers la solution.

10. Système selon la revendication 2, dans lequel au moins une barre de pulvérisation de rinçage (2) rince la courroie transporteuse (15) après qu'elle a quitté la solution (8).

11. Système selon la revendication 2, dans lequel il y a deux barres de pulvérisation de rinçage (2), une barre de pulvérisation (2) qui rince le côté supérieur (16) de la courroie transporteuse (15) avant qu'elle entre dans la solution (8) et une barre de pulvérisation (2) qui rince le côté supérieur (16) de la courroie transporteuse (15) après qu'elle a quitté la solution (8).

12. Système selon la revendication 1, dans lequel il y a deux barres de pulvérisation de rinçage (2), une qui rince le côté supérieur de la courroie transporteuse (15) et l'autre (2) qui rince le côté inférieur (17) de la courroie transporteuse (15) avant que le courroie transporteuse (15) entre dans la solution (8) et deux barres de pulvérisation de rinçage (2), une qui rince le côté supérieur (16) de la courroie transporteuse (15) et l'autre (2) qui rince le côté inférieur (17) de la courroie transporteuse (15) après que le courroie transporteuse (15) a quitté la solution (8)

13. Système selon la revendication 1, dans lequel la solution (8) dans le bassin (3) et la solution (8) émise par les barres de pulvérisation de rinçage (2) et de nettoyage (1) est une solution désinfectante.

14. Système selon la revendication 1, dans lequel la solution (8) dans le bassin (3) et la solution (8) émise par la barre de pulvérisation de nettoyage (1) est la même solution.

15. Système selon la revendication 14, dans lequel la solution émise par la barre de pulvérisation de rinçage (2) n'est pas la même que la solution (8) dans le bassin (3).

16. Système selon la revendication 15, dans lequel la solution émise par la barre de nettoyage (1) puise la solution (8) du bassin (3).

17. Système selon la revendication 1, dans lequel les barres de pulvérisation de nettoyage (1) et de rinçage (2) ont une taille telle que suffisamment de solution (8) est émise pour saturer la largeur de la courroie transporteuse (15).

18. Système selon la revendication 10, dans lequel la barre de pulvérisation de rinçage (2) projette un lubrifiant sur la courroie transporteuse (15).

19. Système selon la revendication 16, dans lequel la solution (8) dans le bassin (3) et émise par les barres de pulvérisation de nettoyage (1) est une solution de nettoyage et la solution émise par les barres de pulvérisation de rinçage (2) est une solution désinfectante.

20. Système selon la revendication 1, comprenant un système de surveillance (18) pour suivre l'utilisation des systèmes.

21. Système selon la revendication 20, dans lequel le système de surveillance (18) fait démarrer et arrêter le système (22) à des intervalles requis, permettant une utilisation uniquement lorsque cela est nécessaire.

22. Système selon la revendication 20, dans lequel le système de surveillance (18) commande les niveaux de solution dans le bassin (3) et la quantité de pulvérisation par les barres de pulvérisation de nettoyage (1) et de rinçage (2).

23. Procédé de nettoyage d'une courroie transporteuse (15), dans lequel une fois que la courroie transporteuse (15) ne porte plus aucun produit, elle est déviée dans un système de traitement (22) comprenant :
un bassin (3) contenant une solution (8) ; et
au moins une barre de pulvérisation de nettoyage (1) immergée dans la solution et qui pulvérise la courroie transporteuse (15) lorsqu'elle passe à travers le bassin (3) ;
**caractérisé en ce que** le système de traitement (22) comprend en outre
au moins une barre de pulvérisation de rinçage (2) qui n'est pas immergée sous la solution (8) et qui rince la courroie transporteuse (15) lorsqu'elle n'est pas immergée dans la solution (8).

24. Procédé selon la revendication 23, dans lequel il y a au moins une barre de pulvérisation de nettoyage (1) immergée dans la solution (8) et qui pulvérise le côté supérieur (16) de la courroie transporteuse (15) lorsqu'elle passe à travers la solution (8) du bassin et au moins une barre de pulvérisation de nettoyage (1) au-dessus de la solution (8) et qui pulvérise le côté inférieur (17) de la courroie transporteuse (15) lorsqu'elle passe à travers la solution (8) du bassin.

25. Procédé selon la revendication 23, dans lequel une fois que la courroie transporteuse (15) a quitté la solution (8) du bassin, il y a au moins une barre de pulvérisation de rinçage (2) qui projette une solution (8) sur la courroie transporteuse (15).

26. Procédé selon la revendication 25, dans lequel il y a au moins une barre de pulvérisation de rinçage (2) placée de manière à projeter une solution (8) sur le côté supérieur (16) de la courroie transporteuse (15) et au moins une barre de pulvérisation de rinçage (2) placée de manière à projeter une solution (8) sur le côté inférieur (17) de la courroie transporteuse (15) lorsque la courroie transporteuse (15) sort de la solution (8) du bassin.

27. Procédé selon la revendication 23, dans lequel avant que la courroie transporteuse (15) entre dans la solution (8) du bassin, il y a au moins une barre de pulvérisation de rinçage (2) qui projette une solution (8) sur la courroie transporteuse (15).

28. Procédé selon la revendication 25, dans lequel il y a au moins une barre de pulvérisation de rinçage (2) placée de manière à projeter une solution (8) sur le côté supérieur (16) de la courroie transporteuse (15) et au moins une barre de pulvérisation de rinçage (2) placée de manière à projeter une solution (8) sur le côté inférieur (17) de la courroie transporteuse (15) lorsque la courroie transporteuse (15) entre dans la solution (8) du bassin.
